# EUROPÄISCHE PATENTSCHRIFT

(11) **EP 1 164 556 B1**
(45) Veröffentlichungstag und Bekanntmachung des Hinweises auf die Patenterteilung: **27.07.2005**
(21) Anmeldenummer: 01111715.7
(22) Anmeldetag: 14.05.2001
(51) Int. Cl.: G08B 13/183, G01S 17/02, F16P 3/14, G01V 8/20

(54) **Optoelektronische Eindringalarm-Vorrichtung**
Opto-electronic intruder alarm apparatus
Appareil d'alarme d'intrusion optoélectronique

(30) Priorität: 26.05.2000 DE 10026305
(43) Veröffentlichungstag der Anmeldung: 19.12.2001
(73) Patentinhaber: Sick AG, 79183 Waldkirch, Breisgau (DE)
(72) Erfinder: Wüstefeld, Martin, 79350 Sexau (DE); Plasberg, Georg, Dr., 79353 Bahlingen (DE); Jürs, Heiner, 79183 Waldkirch (DE); Mutter, Gerhard, 79837 Ibach (DE)
(74) Vertreter: Manitz, Finsterwald & Partner GbR

(56) Entgegenhaltungen:
- DE-A- 4 424 537
- DE-U- 29 602 098
- DE-U- 29 920 715
- US-A- 5 963 253

## Beschreibung

Die vorliegende Erfindung betrifft eine optoelektronische Vorrichtung zur Überwachung eines Schutzbereichs mit zumindest einer berührungslos wirkenden Schutzeinrichtung, die eine Auswerteeinheit zum Erzeugen eines Gegenstandsfeststellungssignals beim Eindringen eines Objektes in den Schutzbereich umfaßt.

Optoelektronische Vorrichtungen dieser Art werden beispielsweise eingesetzt, um gefährliche Maschinen abzusichern, insbesondere ein Eindringen von Personen in den Wirkungsbereich der Maschinen zu verhindern. Die berührungslos wirkende Schutzeinrichtung kann dabei beispielsweise als Lichtschranke, als Lichtgitter oder als Lichttaster ausgebildet sein, die in einem ausreichenden Abstand vor der abzusichernden Maschine angeordnet ist.

Dringt ein Objekt in den Schutzbereich der berührungslos wirkenden Schutzeinrichtung ein, so daß beispielsweise zumindest ein Lichtstrahl unterbrochen wird, so wird ein Gegenstandsfeststellungssignal erzeugt, durch das üblicherweise die Maschine stillgesetzt und ein Alarm ausgelöst wird.

Die berührungslos wirkende Schutzeinrichtung kann auch als Bilderfassungseinheit zum Erfassen eines flächigen oder räumlichen Bilderfassungsbereichs ausgebildet sein. Eine solche Bilderfassungseinheit kann beispielsweise als Kamerasystem ausgebildet sein, wobei der Bilderfassungsbereich sowohl passiv als auch aktiv beleuchtet sein kann. Insbesondere kann eine Beleuchtungseinheit vorgesehen sein, mit der innerhalb des Bilderfassungsbereichs ein komplexes Lichtmuster erzeugt werden kann. Dieses Muster kann von der Bilderfassungseinheit erfaßt und mit einem entsprechenden Referenzmuster verglichen werden. Weichen das erfaßte und das vorgegebene komplexe Muster voneinander ab, so wird das Gegenstandsfeststellungssignal erzeugt. Die Erfindung ist auch auf eine optoelektronischen Vorrichtung mit einer solchen als Bilderfassungseinheit ausgebildeten berührungslos wirkenden Schutzeinrichtung gerichtet.

Im Sinne der vorliegenden Anmeldung ist unter dem Begriff Licht jegliche optische Strahlung, d.h. beispielsweise Infrarotstrahlung, sichtbares Licht und UV-Strahlung zu verstehen. Dementsprechend sind die in dieser Anmeldung erwähnten Licht aussendenden und Licht empfangenden Elemente jeweils zum Aussenden bzw. Empfangen von Licht der verwendeten Frequenz geeignet.

Es ist oft wünschenswert, daß optoelektronische Vorrichtungen der eingangs genannten Art neben ihrer Schutzfunktion weitere Zusatzfunktionen übernehmen können. Eine Zusatzfunktion wird beispielsweise als "Muting" bezeichnet. Unter Muting versteht man die kurzzeitige Deaktivierung der berührungslos wirkenden Schutzeinrichtung, die beispielsweise dann erforderlich ist, wenn als zulässig erkannte Objekte in den Schutzbereich ohne Erzeugen eines Gegenstandsfeststellungssignals eindringen sollen. Beispielsweise sollen Objekte bestimmter vorgegebener Abmessungen auf einem Förderband ungehindert den Schutzbereich passieren können, während Personen oder nicht zulässige Objekte beim Eindringen in den Schutzbereich ein Gegenstandsfeststellungssignal auslösen sollen.

Ein entsprechendes Ansteuern der berührungslos wirkenden Schutzeinrichtung kann beispielsweise durch dem Schutzbereich in Transportrichtung der Objekte vorgeschaltete Lichtschranken erfolgen. Eine solche Vorrichtung ist z.B. aus DE 29920715U1 bekannt. Diese Lichtschranken sind jedoch in der Erkennung von zulässigen Objekten relativ eingeschränkt.

Es ist eine Aufgabe der vorliegenden Erfindung, eine optoelektronische Vorrichtung der eingangs genannten Art so auszubilden, daß in sehr flexibler Weise zusätzlich zur Schutzfunktion weitere Zusatzfunktionen realisiert werden können.

Ausgehend von einer optoelektronischen Vorrichtung der eingangs genannten Art wird diese Aufgabe erfindungsgemäß dadurch gelöst, daß mit der berührungslos wirkenden Schutzeinrichtung einer Bilderfassungseinheit zum Erfassen eines flächigen oder räumlichen Bilderfassungsbereichs gekoppelt ist, mit der ein nahe am Schutzbereich, jedoch außerhalb des Schutzbereichs gelegener sekundärer Überwachungsbereich erfaßbar ist, und daß die berührungslos wirkende Schutzeinrichtung durch die Bilderfassungseinheit ansteuerbar ist.

Umfaßt die berührungslos wirkenden Schutzeinrichtung eine Bilderfassungseinheit zum Erfassen eines flächigen oder räumlichen Bilderfassungsbereichs, so wird die angegebene Aufgabe erfindungsgemäß auch durch eine optoelektronische Vorrichtung der eingangs genannten Art gelöst, bei der nur ein Teil des Bilderfassungsbereichs den Schutzbereich und der restliche Teil des Bilderfassungsbereichs zumindest teilweise einen sekundären Überwachungsbereich bildet und die Auswerteeinheit zum getrennten Auswerten des erfaßten Schutzbereichs und des erfaßten sekundären Überwachungsbereichs ausgebildet ist.

Beiden erfindungsgemäßen Lösungen ist gemeinsam, daß ein von dem Schutzbereich getrennter, sekundärer Überwachungsbereich vorgesehen ist, der durch eine Bilderfassungseinheit erfaßbar und damit überwachbar ist. Durch die Überwachung des sekundären Überwachungsbereichs mittels einer Bilderfassungseinheit ist eine sehr flexible Überwachung des sekundären Überwachungsbereichs möglich. In den sekundären Überwachungsbereich eindringende Objekte können beispielsweise nach ihrer Größe, nach ihrer Farbe, nach ihrer Form, nach ihrer Geschwindigkeit oder nach sonstigen Kriterien klassifiziert werden.

Durch die Erfindung können somit ein- und dieselben Objekte, die nacheinander den sekundären Überwachungsbereich und den Schutzbereich durchlaufen, jeweils einheitlich überwacht und in ihrer Bewegung verfolgt werden.

Nach einer vorteilhaften Ausführungsform der Erfindung ist die Schutzfunktion der berührungslos wirkenden Schutzeinrichtung bei Erfassen eines Objektes mit vorgegebenen charakteristischen Merkmalen innerhalb des sekundären Überwachungsbereichs zumindest bereichsweise und/oder zeitweise deaktivierbar. Auf diese Weise ist eine Muting-Funktion realisierbar, wobei durch die Verwendung einer Bilderfassungseinheit sehr flexible und zuverlässige zulässige von unzulässigen Objekten unterschieden werden können.

Insbesondere ist durch die Bilderfassungseinheit eine Klassifizierung von in den sekundären Überwachungsbereich eindringenden Objekten durchführbar. Durch die Klassifizierung kann beispielsweise die erwähnte Muting-Funktion gesteuert werden oder eine sonstige Zusatzfunktion ausgelöst werden, für die eine Klassifizierung der Objekte vor Erreichen des Schutzbereichs erforderlich ist.

Weiterhin kann durch die Bilderfassungseinheit eine Qualitätskontrolle von in den sekundären Überwachungsbereich eindringenden Objekten durchführbar sein.

Bevorzugt umfaßt die berührungslos wirkenden Schutzeinrichtung zumindest eine Lichtsignale aussendende Sendeeinheit und zumindest eine die ausgesandten Lichtsignale direkt oder indirekt empfangende Empfangseinheit, wobei der Schutzbereich durch den Signalweg der ausgesandten Lichtsignale definiert ist. Die berührungslos wirkende Schutzeinrichtung kann beispielsweise als Kamerasystem, insbesondere mit aktiver Beleuchtung ausgebildet sein. In diesem Fall kann die Licht aussendende Sendeeinheit beispielsweise ein einfaches oder ein komplexes Muster, beispielsweise eine gerade Linie, eine gekrümmte Linie, einzelne Punkte oder sonstige Muster innerhalb des Bilderfassungsbereichs erzeugen, wobei das erzeugte Muster von der Bilderfassungseinheit erfaßt wird. Durch die Auswerteeinheit wird dann das erfaßte Muster mit einem vorgegebenen Muster verglichen, wobei dieses vorgegebene Muster beispielsweise ohne Objekt im Bilderfassungsbereich bzw. mit einem zulässigen Objekt innerhalb des Erfassungsbereichs erzeugt und abgespeichert wurde. Stimmen das erfaßte und das vorgegeben Muster im wesentlichen überein, so wird kein Gegenstandsfeststellungssignal erzeugt. Durch die erfindungsgemäße Vorrichtung erfolgt somit sowohl eine Überwachung der Beleuchtungsebene als auch der Erfassungsebene, da sowohl beim Unterbrechen der ausgesandten Lichtstrahlen als auch der erfaßten remittierten Lichtstrahlen das durch die Lichtsignal gebildete, erfaßte Muster geändert wird.

Die berührungslos wirkende Schutzeinrichtung kann auch als Lichtgitter oder als Lichttaster ausgebildet sein, wobei in diesem Fall die Licht aussendende Sendeeinheit bevorzugt eine Vielzahl von Sendeelementen und die Empfangseinheit bevorzugt eine Vielzahl von Empfangselementen umfaßt. Wird eine bestimmte Mindestanzahl, beispielsweise einer oder mehrere der ausgesandten Lichtstrahlen unterbrochen, so wird dies von der an der Empfangseinheit angeschlossenen Auswerteeinheit erkannt und ein entsprechendes Gegenstandsfeststellungssignal erzeugt.

Der sekundäre Überwachungsbereich kann auf einer Anzeigeeinheit, insbesondere einem Bildschirm darstellbar sein. Auf diese Weise ist beispielsweise eine Diagnosefunktion zusätzlich zu der Schutzfunktion möglich.

Weitere vorteilhafte Ausführungsformen der Erfindung sind in den Unteransprüchen angegeben.

Die Erfindung wird nachfolgend anhand von Ausführungsbeispielen unter Bezugnahme auf die Zeichnungen näher beschrieben; in diesen zeigen:
- Fig. 1: eine erste Ausführungsform der Erfindung,
- Fig. 2: eine zweite Ausführungsform der Erfindung,
- Fig. 3: eine dritte Ausführungsform der Erfindung,
- Fig. 4: eine vierte Ausführungsform der Erfindung und
- Fig. 5: eine fünfte Ausführungsform der Erfindung.

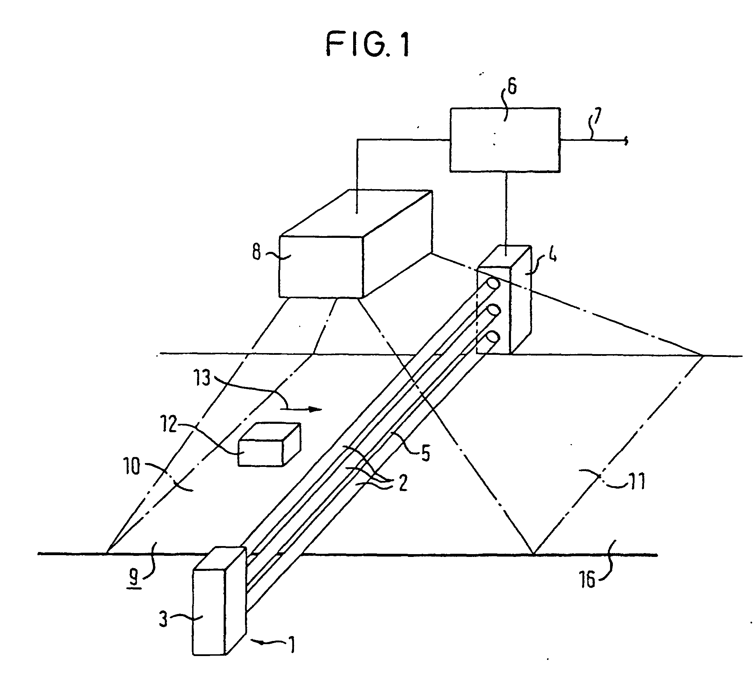

Fig. 1 zeigt eine ein Lichtgitter umfassende, berührungslos wirkende Schutzeinrichtung 1, die eine Lichtstrahlen 2 aussendende Sendeeinheit 3 eine die Lichtstrahlen 2 empfangende Empfangseinheit 4 und eine mit der Empfangseinheit 4 verbundene Auswerteeinheit 6 umfaßt, so daß durch die Lichtstrahlen 2 ein Schutzbereich 5 definiert wird.

Die Empfangseinheit 4 ist mit der Auswerteeinheit 6 so gekoppelt, daß durch diese bei Unterbrechen eines der Lichtstrahlen 2 an einem Ausgang 7 ein Gegenstandsfeststellungssignal erzeugt wird.

Die Auswerteeinheit 6 ist mit einer als Kamera ausgebildeten Bilderfassungseinheit 8 verbunden, die so ausgerichtet ist, daß ihr Bilderfassungsbereich 9 den Schutzbereich 5 überdeckt. Die beiderseits des Schutzbereichs 5 angeordneten Teilbereiche des Bilderfassungsbereichs 9 bilden sekundäre Überwachungsbereiche 10, 11, die von der Bilderfassungseinheit 8 überwacht werden.

Innerhalb des sekundären Überwachungsbereichs 10 ist ein Objekt 12 angeordnet, das beispielsweise auf einem Förderband 16 in Richtung eines Pfeils 13 bewegt wird.

Beim Eintreten des Objekts 12 in den sekundären Überwachungsbereichs 10 wird dieses von der Bilderfassungseinheit 8 erfaßt und von der Auswerteeinheit 6 klassifiziert. Wird das Objekt 12 als zulässiges Objekt erkannt, so wird die berührungslos wirkenden Schutzeinrichtung 1 deaktiviert, so daß bei einer weiteren Bewegung des Objekts 12 in Richtung des Pfeils 13 trotz Eindringen des Objekts 12 in den Schutzbereich 5 kein Gegenstandsfeststellungssignal erzeugt wird. Die Deaktivierung kann beispielsweise durch eine entsprechende Ansteuerung der Empfangseinheit 4 oder durch eine entsprechende Auswertelogik innerhalb der Auswerteeinheit 6 erfolgen.

Wird das Objekt nach Verlassen des Schutzbereichs 5 vollständig innerhalb des sekundären Überwachungsbereichs 11 von der Bilderfassungseinheit 8 erfaßt, so wird die berührungslos wirkenden Schutzeinrichtung 1 wieder aktiviert.

Zusätzlich zu der Ansteuerung der berührungslos wirkenden Schutzeinrichtung 1 kann das von der Bilderfassungseinheit 8 erzeugte Abbild der sekundären Überwachungsbereiche 10, 11 durch die Auswerteeinheit 6 auch für eine Qualitätssicherungskontrolle des Objektes 12 oder beispielsweise zur Materialflußsteuerung herangezogen werden.

Die Deaktivierung der berührungslos wirkenden Schutzeinrichtung 1 kann beispielsweise durch ein Deaktivieren der Empfangselemente der Empfangseinheit 4 oder durch eine entsprechende logische Verknüpfung innerhalb der Auswerteeinheit 6 erfolgen. Bei Verwendung eines Lichttasters kann die Deaktivierung der Schutzeinrichtung beispielsweise auch durch ein Deaktivieren der Sendeelemente erfolgen.

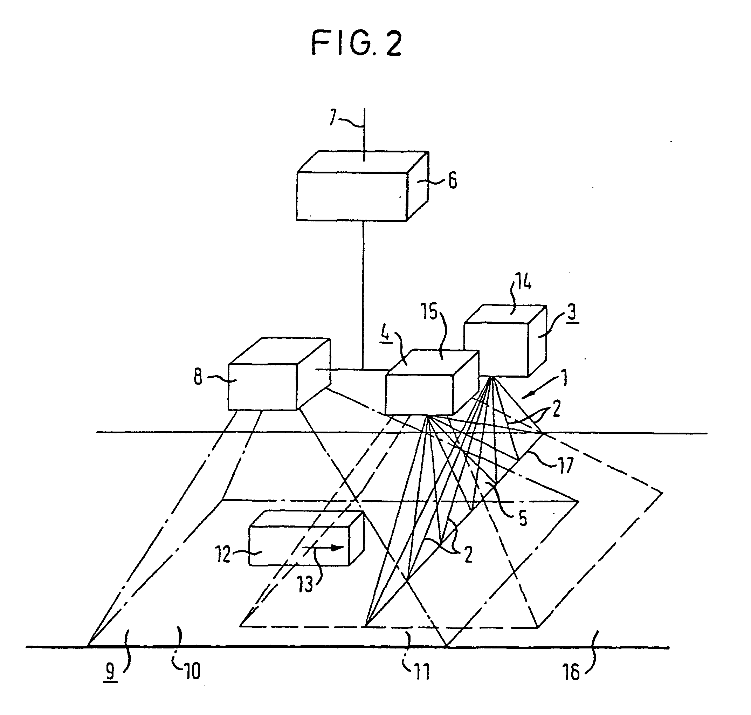

In der in Fig. 2 dargestellten Ausführungsform sind Elemente, die bereits in Fig. 1 dargestellt sind, mit den gleichen Bezugszeichen bezeichnet.

Die Ausführungsform gemäß Fig. 2 unterscheidet sich von der Ausführungsform gemäß Fig. 1 dadurch, daß die berührungslos wirkende Schutzbereich 1 nicht ein Lichtgitter, sondern eine als Beleuchtungseinheit 14 ausgebildete Sendeeinheit 3 und eine als Bilderfassungseinheit 15, beispielsweise als Kamera ausgebildete Empfangseinheit 4 umfaßt. Von der Beleuchtungseinheit 14 werden Lichtstrahlen 2 in Richtung des Förderbandes 16 ausgesandt, so daß auf dem Förderband 16 eine strukturierte Beleuchtung in Form einer Linie 17 erzeugt wird.

Die Linie 17 wird von der Bilderfassungseinheit 4 erfaßt, wobei das erfaßte Bild an die Auswerteeinheit 6 übertragen wird. Die Auswerteeinheit 6 vergleicht das erfaßte Bild der Linie 17 mit einem vorgegebenen Referenzbild, das dem Verlauf der Linie 17 bei nicht vorhandenem Objekt 12 entspricht. Stimmt das erfaßte Bild der Linie 17 mit dem Referenzbild innerhalb eines gewissen Toleranzbereichs überein, so wird von der Auswerteeinheit 6 kein Gegenstandsfeststellungssignal erzeugt. Weicht das erfaßte Bild der Linie 17 hingegen von dem Referenzbild um einen vorgegebenen Schwellenwert ab, so wird am Ausgang 7 der Auswerteeinheit 6 ein Gegenstandsfeststellungssignal erzeugt. Dies ist dann der Fall, wenn das auf dem Förderband 16 angeordnete Objekt 12, entlang des Pfeils 13 soweit bewegt wird, bis es in den durch die Lichtstrahlen 2 gebildeten Schutzbereich 5 eindringt.

Zusätzlich zu der Bilderfassungseinheit 15 ist wiederum eine Bilderfassungseinheit 8 vorgesehen, durch die ein Bilderfassungsbereich 9 überwacht wird, der bereichsweise in Bewegungsrichtung des Objekts 12 vor dem Schutzbereich 5 ausgebildet ist. Wie in Fig. 1 ist auch in Fig. 2 der Bilderfassungsbereich 9 der Bilderfassungseinheit 8 in zwei sekundäre Überwachungsbereich 10, 11 aufgeteilt, die jeweils auf unterschiedlichen Seiten des Schutzbereichs 5 angeordnet sind.

Tritt ein zulässiges Objekt 12 in den sekundären Überwachungsbereich 10 ein, so wird das Objekt 12 von der beispielsweise als Kamera ausgebildeten Bilderfassungseinheit 8 erfaßt und das erfaßte Abbild des Objektes 12 von der Auswerteeinheit 6 ausgewertet. Dabei wird beispielsweise die Form, die Größe (Länge, Höhe, Breite), die Farbe oder sonstige optisch erfaßbare Eigenschaften des Objekts 12 erkannt und das Objekt 12 aus diesen charakteristischen Merkmalen als zulässiges Objekt klassifiziert. In diesem Fall wird die Schutzfunktion der berührungslos wirkenden Schutzeinrichtung 1 durch die Auswerteeinheit 6 deaktiviert, so daß das zulässige Objekt 12 ohne Erzeugen eines Gegenstandsfeststellungssignals den Schutzbereich 5 passieren kann.

Zur Steigerung der Zuverlässigkeit der Erkennung kann das Objekt 12 beim Durchlaufen des deaktivierten Schutzbereichs 5 unter Verwendung der von der Beleuchtungseinheit 14 erzeugten strukturierten Beleuchtung ein weiteres Mal ausgemessen werden. Weiterhin kann bei Bedarf zur Erhöhung der Meßgenauigkeit der Größe des Objekts 12 die Objektgeschwindigkeit berücksichtigt werden.

Letztlich können auch bei der Ausführungsform nach Fig. 2 die bereits zur Fig. 1 beschriebenen weiteren Zusatzfunktionen wie beispielsweise eine Qualitätssicherungskontrolle oder eine Materialflußsteuerung durch eine Auswertung der von der Bilderfassungseinheit 8 erzeugten Abbilder der sekundäre Überwachungsbereiche 10 und 11 realisiert werden.

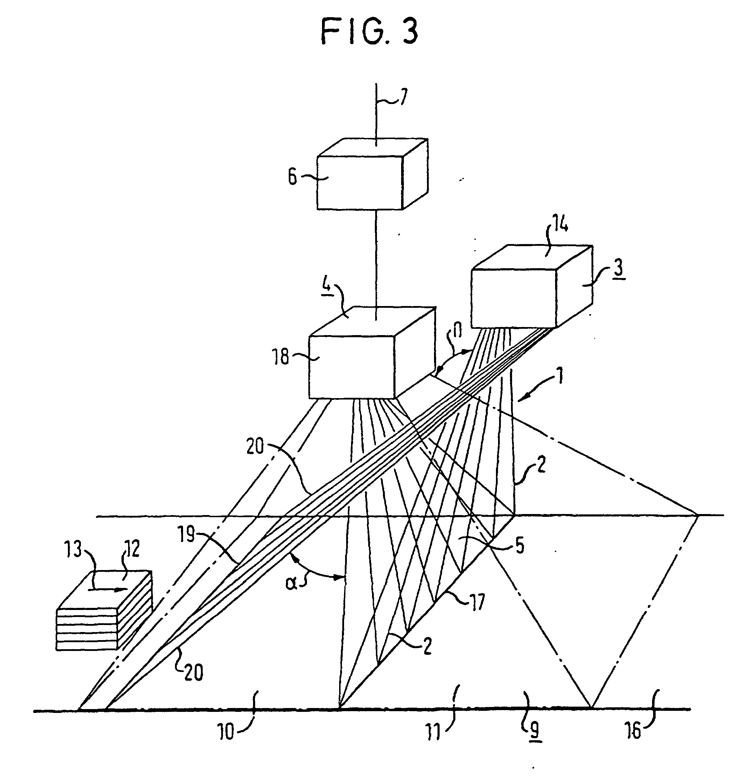

Das Ausführungsbeispiel gemäß Fig. 3 unterscheidet sich von dem Ausführungsbeispiel gemäß Fig. 2 darin, daß die beiden Bilderfassungseinheiten 4, 8 zu einer einzigen Bilderfassungseinheit 18 zusammengefaßt sind. Weiterhin werden durch die Beleuchtungseinheit 15 zwei Linien 17, 19 auf das Förderband 16 projiziert, die jeweils von der Bilderfassungseinheit 18 erfaßt und von der Auswerteeinheit 6 ausgewertet werden. Die Linien 17, 19 können dabei, wie in allen weiteren Ausführungsformen, sowohl strukturiert als auch homogen ausgebildet sein. Erforderlich ist lediglich, daß die Beleuchtungseinheit 14 und die Bilderfassungseinheit 18 so unter einem Triangulationswinkel angeordnet sind, so daß die Linien 17, 19 von der Bilderfassungseinheit 18 erfaßt werden können. Dementsprechend ist in Fig. 3 der Triangulationswinkel zwischen der Bilderfassungseinheit 18 und den die Linie 17 bildenden Lichtstrahlen 2 mit β und der Triangulationswinkel zwischen der Bilderfassungseinheit 18 und den die Linie 19 bildenden Lichtstrahlen 20 mit α bezeichnet.

Tritt das Objekt in den sekundären Überwachungsbereich 10 ein, so daß die Linie 19 auf der Vorderseite des Objekts 12 zu liegen kommt, so verschiebt sich die Linie 19 entsprechend der Bewegung des Objekts 12 auf diesem nach oben. Die resultierende Verschiebung ist dabei ein Maß für die Objekthöhe. Durch Auswertung der Objektgeschwindigkeit oder Einsatz weiterer auf das Förderband 16 projizierter Lichtlinien kann darüber hinaus die Länge des Objekts 12 bestimmt werden. Dazu werden die jeweiligen Lichtlinien 19 von der Bilderfassungseinheit 18 erfaßt und von der Auswerteeinheit 6 entsprechend ausgewertet. Wird ein zulässiges Objekt 12 erkannt, so wird die Schutzfunktion der berührungslos wirkenden Schutzeinrichtung 1 zeitweise deaktiviert, so daß das zulässige Objekt 12 ohne Erzeugen eines Gegenstandsfeststellungssignals den Schutzbereich 5 passieren kann.

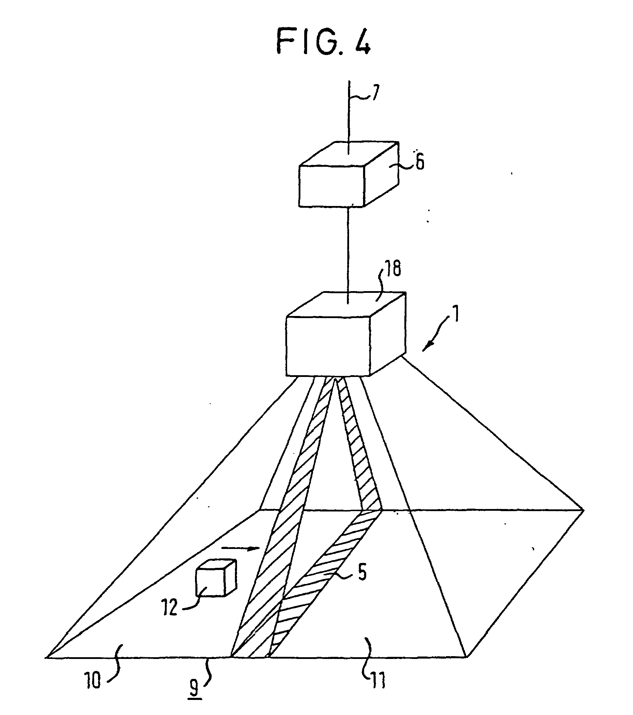

Bei dem Ausführungsbeispiel gemäß Fig. 4 wird nur ein Teil des Bilderfassungsbereichs 9 der Bilderfassungseinheit 18 durch die Auswerteeinheit 6 als Schutzbereich 5 ausgewertet. Der restliche Teil des Bilderfassungsbereichs 9 ist als sekundärer Überwachungsbereich 10, 11 ausgebildet.

Die Auswerteeinheit 6 ist so ausgebildet, daß bei Eindringen eines Objekts 12 in den Schutzbereich 5 ein Gegenstandsfeststellungssignal am Ausgang 7 erzeugt wird. Dazu wird jeweils das Abbild des von der Bilderfassungseinheit 18 erfaßten Schutzbereichs 5 durch die Auswerteeinheit 6 mit einem vorgegebenen Referenzbild dieses Bereichs verglichen. Weicht das erfaßte Abbild des Schutzbereichs 5 von dem vorgegebenen Abbild ab, so wird das Gegenstandsfeststellungssignal erzeugt.

Die für die Schutzfunktion nicht erforderlichen sekundären Überwachungsbereiche 10 und 11 können von der Auswerteeinheit 6 separat ausgewertet werden. Beispielsweise werden die Abbilder der sekundären Überwachungsbereiche 10, 11 von der Auswerteeinheit 6 auf das Eindringen zulässiger Objekte 12 überprüft, so daß bei Erkennen eines zulässigen Objektes die Schutzfunktion der berührungslos wirkenden Schutzeinrichtung 1 zeitweise deaktiviert wird, d.h. daß die Auswerteeinheit 6 nach Eintreten eines solchen als zulässig erkannten Objektes 12 in den Schutzbereich 5 kein Gegenstandsfeststellungssignal erzeugt.

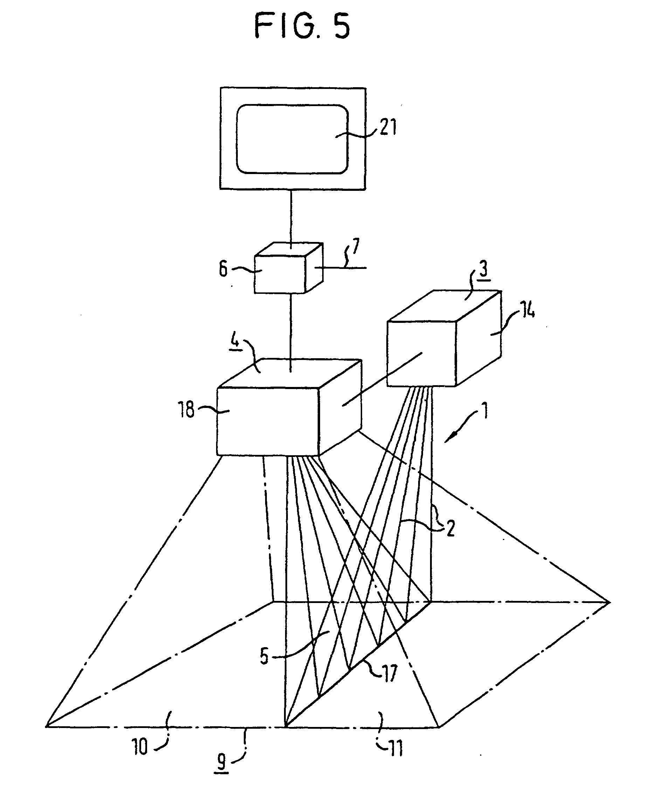

In ähnlicher Weise kann alternativ oder zusätzlich die Auswerteeinheit 6 die Abbilder der sekundären Überwachungsbereiche 10, 11 für weitere Zusatzfunktionen, wie beispielsweise Qualitätskontrolle oder Materialflußsteuerung verwenden. Zusätzlich zur Steuerung oder Überwachung von gefährdenden Abläufen kann die Bilderfassungseinheit 18 auch für die Diagnose herangezogen werden. Eine entsprechende Vorrichtung ist in Fig. 5 gezeigt.

Im Falle der Verletzung des Schutzbereichs 5 wird durch die Auswerteeinheit 6 ein Gegenstandsfeststellungssignal erzeugt, durch das üblicherweise die abgesicherte Maschine stillgesetzt wird.

Gemäß der Ausführungsform nach Fig. 5 wird das von der Bilderfassungseinheit 18 erfaßte Bild über die Auswerteeinheit 6 an eine Anzeigeeinheit 21 geleitet und an dieser dargestellt. Die Anzeigeeinheit 21 kann beispielsweise in einem Überwachungszentrum angeordnet sein, so daß durch eine Bedienperson die Ursache der Verletzung des Schutzbereichs 5 analysiert werden kann und die geeigneten Maßnahmen eingeleitet werden können. Insbesondere in großen Fertigungshallen kann auf diese Weise eine entscheidende Zeitersparnis erreicht werden.

Mit dieser Ausführungsform ist beispielsweise der ferngesteuerte Wiederanlauf einer Maschine nach Diagnose aus dem Überwachungszentrum möglich.

### Bezugszeichenliste

- 1: Berührungslos wirkenden Schutzeinrichtung
- 2: Lichtstrahlen
- 3: Sendeeinheit
- 4: Empfangseinheit
- 5: Schutzbereich
- 6: Auswerteeinheit
- 7: Ausgang
- 8: Bilderfassungseinheit
- 9: Bilderfassungsbereich
- 10: sekundärer Überwachungsbeich
- 11: sekundärer Überwachungsbeich
- 12: Objekt
- 13: Pfeil
- 14: Beleuchtungseinheit
- 15: Bilderfassungseinheit
- 16: Förderband
- 17: Linie
- 18: Bilderfassungseinheit
- 19: Linie
- 20: Lichtstrahlen
- 21: Anzeigeeinheit

## Patentansprüche

1. Optoelektronische Vorrichtung zur Überwachung eines Schutzbereichs (5) mit zumindest einer berührungslos wirkenden Schutzeinrichtung (1), die eine Auswerteeinheit (6) zum Erzeugen eines Gegenstandfeststellungssignals beim Eindringen eines Objektes (12) in den Schutzbereich (5) umfaßt,
**dadurch gekennzeichnet,**
**daß** mit der berührungslos wirkenden Schutzeinrichtung (1) eine Bilderfassungseinheit (8) zum Erfassen eines flächigen oder räumlichen Bilderfassungsbereichs gekoppelt ist, mit der ein nahe am Schutzbereich (5), jedoch außerhalb des Schutzbereichs gelegener sekundärer Überwachungsbereich (10, 11) erfaßbar ist, und daß die berührungslos wirkende Schutzeinrichtung (1) durch die Bilderfassungseinheit (8) ansteuerbar ist.

2. Optoelektronische Vorrichtung zur Überwachung eines Schutzbereichs (5) mit zumindest einer berührungslos wirkenden Schutzeinrichtung (1), die eine Bilderfassungseinheit (15, 18) zum Erfassen eines flächigen oder räumlichen Bilderfassungsbereichs (9) und eine Auswerteeinheit (6) zum Erzeugen eines Gegenstandsfeststellungssignals beim Eindringen eines Objektes (12) in den Schutzbereich (5) umfaßt,
**dadurch gekennzeichnet,**
**daß** nur ein Teil des Bilderfassungsbereichs (9) den Schutzbereich (5) und der restliche Teil des Bilderfassungsbereichs (9) zumindest teilweise einen sekundären Überwachungsbereich (10, 11) bildet und daß die Auswerteeinheit (6) zum getrennten Auswerten des erfaßten Schutzbereichs (5) und des erfaßten sekundären Überwachungsbereichs (10, 11) ausgebildet ist.

3. Optoelektronische Vorrichtung nach Anspruch 1 oder 2,
**dadurch gekennzeichnet,**
**daß** die Schutzfunktion der berührungslos wirkenden Schutzeinrichtung (1) bei Erfassen eines Objektes (12) mit vorgegebenen charakteristischen Merkmalen innerhalb des sekundären Überwachungsbereichs (10, 11) zumindest bereichsweise und/oder zeitweise deaktivierbar ist.

4. Optoelektronische Vorrichtung nach einem der vorhergehenden Ansprüche,
**dadurch gekennzeichnet,**
**daß** durch die Bilderfassungseinheit (8, 18) eine Klassifizierung von in den sekundären Überwachungsbereich (10, 11) eindringenden Objekten (12) durchführbar ist.

5. Optoelektronische Vorrichtung nach einem der vorhergehenden Ansprüche,
**dadurch gekennzeichnet,**
**daß** durch die Bilderfassungseinheit (8, 18) eine Qualitätskontrolle von in den sekundären Überwachungsbereich (10, 11) eindringenden Objekten (12) durchführbar ist.

6. Optoelektronische Vorrichtung nach einem der vorhergehenden Ansprüche,
**dadurch gekennzeichnet,**
**daß** die berührungslos wirkende Schutzeinrichtung (1) zumindest eine Lichtsignale (2) aussendende Sendeeinheit (3) und zumindest eine die ausgesandten Lichtsignale (2) direkt oder indirekt empfangende Empfangseinheit (4) umfaßt und daß der Schutzbereich (5) durch den Signalweg der ausgesandten Lichtsignale (2) definiert ist.

7. Optoelektronische Vorrichtung nach einem der vorhergehenden Ansprüche,
**dadurch gekennzeichnet,**
**daß** die berührungslos wirkende Schutzeinrichtung (1) als Kamerasystem, insbesondere mit aktiver Beleuchtung (14) ausgebildet ist.

8. Optoelektronische Vorrichtung nach einem der vorhergehenden Ansprüche,
**dadurch gekennzeichnet,**
**daß** die Bilderfassungseinheit (8, 15, 18) als Kamera ausgebildet ist.

9. Optoelektronische Vorrichtung nach einem der vorhergehenden Ansprüche,
**dadurch gekennzeichnet,**
**daß** zumindest der sekundäre Überwachungsbereich (10, 11) auf einer Anzeigeeinheit (21), insbesondere einem Bildschirm darstellbar ist.

10. Optoelektronische Vorrichtung nach einem der vorhergehenden Ansprüche,
**dadurch gekennzeichnet,**
**daß** die berührungslos wirkende Schutzeinrichtung (1) als Lichtgitter oder als Lichttaster ausgebildet ist und/oder daß die Beleuchtung (14) und die Bilderfassungseinheit (15, 18) in einem gemeinsamen Gehäuse oder in unterschiedlichen Gehäusen angeordnet sind.

## Claims

1. An optoelectronic apparatus for the monitoring of a protected zone (5) comprising at least one protection device (1) which works in a non-contact manner and which comprises an evaluation unit (6) for the generation of an object detection signal on the intrusion of an object (12) into the protected zone (5), **characterized in that** an image detection unit (8) is coupled to the protection device (1), which works in a non-contact manner, for the detection of an areal or spatial image detection area, with a secondary monitored zone (10, 11) disposed close to the protected zone (5), but outside the protected zone, being detectable by said image detection unit (8); and **in that** the protection device (1), which works in a non-contact manner, is controllable by the image detection unit (8).

2. An optoelectronic apparatus for the monitoring of a protected zone (5) comprising at least one protection device (1) which works in a non-contact manner and which includes an image detection unit (15, 18) for the detection of an areal or spatial image detection area (9) and an evaluation unit (6) for the generation of an object detection signal on the intrusion of an object (12) into the protected zone (5), **characterized in that** only a part of the image detection area (9) forms the protected zone (5) and the remaining part of the image detection area (9) forms a secondary monitored zone (10, 11) at least in part; and **in that** the evaluation unit (6) is formed for the separate evaluation of the detected protected zone (5) and of the detected secondary monitored zone (10, 11).

3. An optoelectronic apparatus in accordance with claim 1 or claim 2, **characterized in that** the protection function of the protection device (1), which works in a non-contact manner, can be deactivated at least regionally and/or for a time on the detection of an object (12) with pre-set characteristic features inside the secondary monitored zone (10, 11).

4. An optoelectronic apparatus in accordance with any one of the preceding claims, **characterized in that** a classification of objects (12) intruding into the secondary monitored zone (10, 11) can be carried out by the image detection unit (8, 18).

5. An optoelectronic apparatus in accordance with any one of the preceding claims, **characterized in that** a quality control of objects (12) penetrating into the secondary monitored zone (10, 11) can be carried out by the image detection unit (8, 18).

6. An optoelectronic apparatus in accordance with any one of the preceding claims, **characterized in that** the protection device (1), which works in a non-contact manner, comprises at least one transmitter unit (3) transmitting light signals (2) and at least one receiver unit (4) receiving the transmitted light signals (2) directly or indirectly; and **in that** the protected zone (5) is defined by the signal path of the transmitted light signals (2).

7. An optoelectronic apparatus in accordance with any one of the preceding claims, **characterized in that** the protection device (1), which works in a non-contact manner, is made as a camera system, in particular with an active illumination unit (14).

8. An optoelectronic apparatus in accordance with any one of the preceding claims, **characterized in that** the image detection unit (8, 15, 18) is made as a camera.

9. An optoelectronic apparatus in accordance with any one of the preceding claims, **characterized in that** at least the secondary monitored zone (10, 11) can be displayed on a display unit (21), in particular on a screen.

10. An optoelectronic apparatus in accordance with any one of the preceding claims, **characterized in that** the protection device (1), which works in a non-contact manner, is formed as a light grid or as a light scanner; and or **in that** the illumination unit (14) and the image detection unit (15, 18) are arranged in a common housing or in different housings.

## Revendications

1. Dispositif optoélectronique destiné à la surveillance d'une zone protégée (5), comportant au moins un dispositif de protection (1) agissant sans contact, qui comprend une unité d'évaluation (6) pour la génération d'un signal de détection d'objet lors de l'intrusion d'un objet (12) dans la zone protégée (5),
**caractérisé en ce que**
une unité de saisie d'images (8) pour la saisie d'une zone de saisie d'images plane ou spatiale est couplée au dispositif de protection (1) agissant sans contact, avec laquelle peut être saisie une zone de surveillance secondaire (10, 11) proche de la zone protégée (5), mais située en dehors de la zone protégée, et **en ce que** le dispositif de protection (1) agissant sans contact peut être commandé par l'unité de saisie d'images (8).

2. Dispositif optoélectronique destiné à la surveillance d'une zone protégée (5), comportant au moins un dispositif de protection (1) agissant sans contact, qui comprend une unité de saisie d'images (15, 18) pour la saisie d'une zone de saisie d'images (9) plane ou spatiale, et une unité d'évaluation (6) pour la génération d'un signal de détection d'objet lors de l'intrusion d'un objet (12) dans la zone protégée (5),
**caractérisé en ce que**
une partie seulement de la zone de saisie d'images (9) constitue la zone protégée (5), et que la partie restante de la zone de saisie d'images (9) constitue, au moins partiellement, une zone de surveillance secondaire (10, 11), et **en ce que** l'unité d'évaluation (6) est agencée pour l'évaluation séparée de la zone protégée (5) saisie et de la zone de surveillance secondaire (10, 11) saisie.

3. Dispositif optoélectronique selon la revendication 1 ou 2,
**caractérisé en ce que**,
lors de la détection d'un objet (12) présentant des particularités caractéristiques prédéterminées à l'intérieur de la zone de surveillance secondaire (10, 11), la fonction de protection du dispositif de protection (1) agissant sans contact peut être désactivée, au moins par zones et/ou temporairement.

4. Dispositif optoélectronique selon l'une des revendications précédentes,
**caractérisé en ce que**
une classification d'objets (12) pénétrant dans la zone de surveillance secondaire (10, 11) peut être effectuée par l'unité de saisie d'images (8, 18).

5. Dispositif optoélectronique selon l'une des revendications précédentes,
**caractérisé en ce que**
un contrôle qualitatif d'objets (12) pénétrant dans la zone de surveillance secondaire (10, 11) peut être effectué par l'unité de saisie d'images (8, 18).

6. Dispositif optoélectronique selon l'une des revendications précédentes,
**caractérisé en ce que**
le dispositif de protection (1) agissant sans contact comporte au moins une unité d'émission (3) émettant des signaux lumineux (2), et au moins une unité de réception (4) recevant directement ou indirectement les signaux lumineux (2) émis, et **en ce que** la zone protégée (5) est définie par la voie de signalisation des signaux lumineux (2) émis.

7. Dispositif optoélectronique selon l'une des revendications précédentes,
**caractérisé en ce que**
le dispositif de protection (1) agissant sans contact est agencé sous la forme d'un système de caméra, notamment à éclairage actif (14).

8. Dispositif optoélectronique selon l'une des revendications précédentes,
**caractérisé en ce que**
l'unité de saisie d'images (8, 15, 18) est agencée sous la forme d'une caméra.

9. Dispositif optoélectronique selon l'une des revendications précédentes,
**caractérisé en ce que**
au moins la zone de surveillance secondaire (10, 11) peut être représentée sur une unité d'affichage (21), notamment un écran.

10. Dispositif optoélectronique selon l'une des revendications précédentes,
**caractérisé en ce que**
le dispositif de protection (1) agissant sans contact est agencé sous la forme d'un réseau photoélectrique ou d'un détecteur de lumière, et/ou **en ce que** l'éclairage (14) et l'unité de saisie d'images (15, 18) sont disposés dans un boîtier commun ou dans différents boîtiers.
